# EUROPÄISCHE PATENTSCHRIFT

(11) **EP 4 721 249 B1**
(45) Veröffentlichungstag und Bekanntmachung des Hinweises auf die Patenterteilung: **28.10.2026**
(21) Anmeldenummer: 24723007.1
(22) Anmeldetag: 19.04.2024
(51) Int. Cl.: H02K 9/28, H01R 39/38, H02K 9/19

(54) **STROMÜBERTRAGUNGSEINRICHTUNG ZUR ELEKTRISCHEN STROMÜBERTRAGUNG AUF EINEN ROTOR EINER ELEKTRISCHEN MASCHINE**
CURRENT TRANSMISSION DEVICE FOR TRANSMITTING ELECTRICAL CURRENT TO A ROTOR OF AN ELECTRIC MACHINE
DISPOSITIF DE TRANSMISSION DE COURANT DESTINÉ À TRANSMETTRE UN COURANT ÉLECTRIQUE À UN ROTOR D'UNE MACHINE ÉLECTRIQUE

(30) Priorität: 24.05.2023 DE 102023113582
(43) Veröffentlichungstag der Anmeldung: 08.04.2026
(73) Patentinhaber: Schaeffler Technologies AG & Co. KG, 91074 Herzogenaurach (DE)
(72) Erfinder: WITTER, Oliver, 98663 Westhausen (DE); ROMEIS, Marcus, 91227 Leinburg (DE); LANG, David, 91088 Bubenreuth (DE)
(74) Vertreter: Schaeffler Technologies
(86) Internationale Anmeldenummer: PCT/DE2024/100339
(87) Internationale Veröffentlichungsnummer: WO 2024/240283

(56) Entgegenhaltungen:
- DE-B3- 102021 122 065
- DE-B4- 102019 100 729
- DE-U- 6 936 266
- DE-U1- 9 301 792

## Beschreibung

Die Erfindung betrifft eine Stromübertragungseinrichtung zur elektrischen Stromübertragung auf einen Rotor einer elektrischen Maschine, mit zwei Kontaktträgern, die jeweils elektrische Schleifkontakte zur Stromübertragung auf den Rotor tragen, wobei zwischen den Kontaktträgern ein diese tragender und elektrisch isolierender Grundträger angeordnet ist, wobei die Stromübertragungsvorrichtung wenigstens einen Kühlmittelkanal hat.

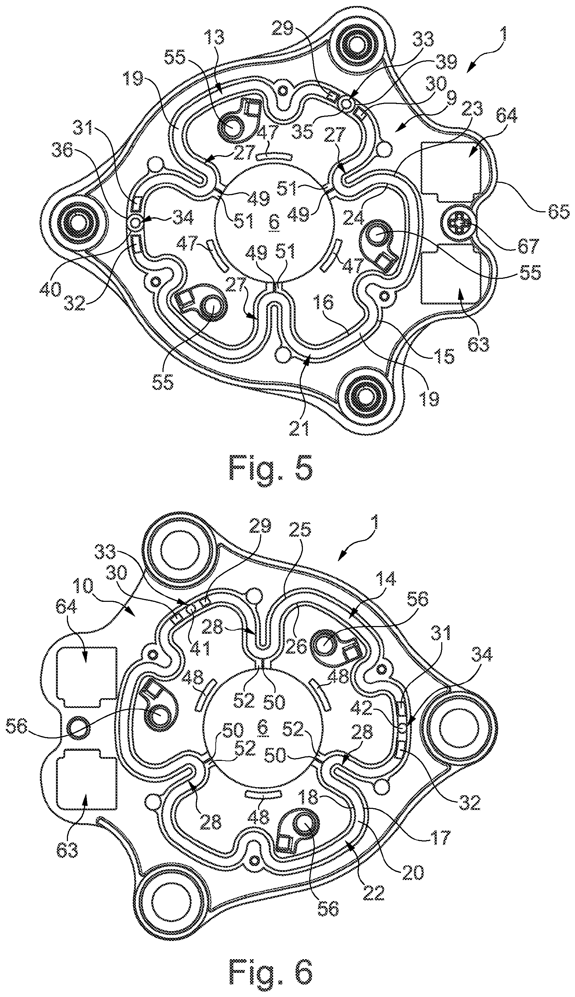

Als nächstkommend wird das Dokument DE 10 2021 122 065 B3 angesehen. Beschrieben ist eine Stromübertragungseinrichtung mit einem Grundträger und beidseitigen Kontaktträgern mit respektiven Bürsten hieran. Der Grundträger hat gemäß Fig. 6, ausgehend von einem seitlichen Einlass, innenwandig einen Quer- und einen Radialkanal für Kühlmittel, welcher zu beidseitigen Austritten geringfügig oberhalb der Rotoröffnung führt.

Aus DE 10 2019 100 729 B4 ist ein Bürstenmodul für ein Schleifringsystem einer stromerregten elektrischen Maschine für ein Kraftfahrzeug zum Bestromen eines Rotors der elektrischen Maschine bekannt. Zur Wärmeabfuhr von dem Bürstenmodul ist ein in eine Halteeinrichtung zum Halten des Bürstenträgers eingeschlossener Wärmeleitkern vorgesehen.

Des Weiteren wird auf die Dokumente DE 93 01 792 U1, DE 69 36 266 U und GB 967 623 A verwiesen.

Der Erfindung liegt die Aufgabe zugrunde, eine Stromübertragungseinrichtung der vorgenannten Art vorzuschlagen, welche auf konstruktiv einfache und kostengünstige Weise eine insbesondere hinsichtlich Leistungsfähigkeit und Betriebssicherheit verbesserte Kühlung der Schleifkontakte einer elektrischen Maschine ermöglicht.

Erfindungsgemäß wird diese Aufgabe die Merkmale des unabhängigen Anspruchs 1 gelöst. Diese Merkmale besagen, dass an den zumindest abschnittsweise aneinander anliegenden Elementen Grundträger und Kontaktträger, zwischen jeder Außenseite des Grundträgers und dem anliegenden Kontaktträger, zumindest ein geschlossen umlaufender Kühlmittelkanal zur Kühlung der beiden Kontaktträger gebildet ist, derart, dass am Grundträger, an seiner dem jeweiligen Kontaktträger zugewandten Außenseite, eine an der Oberfläche hervorstehende einseitig offenen Rippenstruktur vorgesehen ist, welche mit dem an ihr anliegenden und diese an ihrer axial offenen Seite kühlmitteldicht abdeckenden jeweiligen Kontaktträger den geschlossen umlaufenden Kühlmittelkanal bildet.

Somit ist auf konstruktiv einfache und kostengünstige Weise eine insbesondere hinsichtlich Leistungsfähigkeit und Betriebssicherheit verbesserte Kühlung von elektrischen Schleifkontakten einer elektrischen Maschine vorgeschlagen. Durch das Zusammenwirken der Elemente Grundträger und jeweiliger Kontaktträger ist, ohne zusätzlichen Bauteilebedarf, zwischen jeder Außenseite des Grundträgers und dem jeweils anliegenden Kontaktträger zumindest ein geschlossen umlaufender Kühlmittelkanal gebildet. Durch eine gezielte Kanalführung ist eine gezielte aktive Kühlung der beiden Kontaktträger und der von diesen getragenen elektrischen Schleifkontakten mit hoher Kühlleistung erreichbar.

Der auf diese Weise gebildete zumindest eine geschlossen umlaufende Kühlmittelkanal zwischen jeder Außenseite des Grundträgers und dem jeweils anliegenden Kontaktträger ist in einem geschlossenen Weg mit Kühlmittel durchströmbar, ohne dass Kühlmittel unkontrolliert in die Umgebung gelangt.

Demnach wird ein unkontrollierter Kontakt der elektrischen Schleifkontakte mit dem Kühlmittel vermieden, wodurch die Kühlung der elektrischen Schleifkontakte unabhängig von der Schmierung derselben gestaltet werden kann. Insbesondere ist bei steigender Kühlleistung und steigendem Kühlmittelstrom eine unkontrollierte Beaufschlagung der elektrischen Schleifkontakte mit Kühlmittel, insbesondere ein sogenanntes Aufschwimmen der elektrischen Schleifkontakte, vermeidbar, was hierdurch bedingte Störungen im Betrieb der elektrischen Maschine sicher vermeidet.

Eine Weiterbildung der Erfindung sieht vor, dass die jeweilige Rippenstrukturen durch zumindest zwei an der Oberfläche hervorstehende Rippen gebildet sind, wobei die Rippen jeweils gegenüberliegend angeordnet sind und geschlossen umlaufen, derart, dass sie zwischen ihnen einen geschlossen umlaufenden einseitig offenen Kühlmittelkanal begrenzen, der an der offenen Seite durch einen anliegenden Kontaktträger kühlmitteldicht abgedeckt ist.

Es ist dabei des Weiteren von Vorteil, wenn die Rippen vorzugsweise jeweils an den Stirnseiten ihrer axial vorstehenden freien Enden jeweils eine Dichtfläche bilden. Vorzugsweise ist dabei an den Dichtflächen von zwei gegenüberliegend angeordneten Rippen der der jeweilige Kontaktträger kühlmitteldicht angelegt.

Die Ausgestaltung der Erfindung kann weiter vereinfacht werden, wenn die Kontaktträger bevorzugt als Platten ausgeführt sind. Dabei können die Kontaktträger jeweils mit einer flachen axialen Innenseite an planen Dichtflächen der an den voneinander abgewandten axialen Außenseiten des Grundträgers gebildeten kühlmittelführenden Rippenstrukturen kühlmitteldicht axial angelegt sein und jeweils auf einfache Weise einen zwischen diesen gebildeten einseitig offenen Kühlmittelkanal an der offenen Seite kühlmitteldicht nach außen abdecken.

In einer vorteilhaften Weiterbildung der Erfindung stehen die an den Außenseiten des Grundträgers jeweils an den kühlmittelführenden Rippenstrukturen gebildeten Kühlmittelkanäle miteinander in Kühlmittelverbindung. Dadurch ist es in vorteilhafter Weise möglich, an einer der Außenseiten des Grundträgers einen gemeinsamen Kühlmittelzulauf und einen gemeinsamen Kühlmittelablauf auszubilden, so dass die Kühlmittelkanäle an beiden Außenseiten des Grundträgers von einer Außenseite desselben an eine Kühlmittelversorgung, insbesondere an den Ölkreislauf der elektrischen Maschine, anschließbar sind.

In einer nächsten vorteilhaften Weiterbildung der Erfindung sind der Kühlmittelzulauf und der Kühlmittelablauf an einer Außenseite des Grundträgers jeweils vorzugsweise als röhrenförmiger Ansatz, beispielsweise als Anschlussstutzen, durch den anliegenden Kontaktträger nach axial außen an letzterem vorstehend hindurchgeführt.

Bevorzugt sind der Kühlmittelzulauf und der Kühlmittelablauf nach innen an den jeweiligen Ansatz fluchtend mit diesem anschließend als Durchbruch durch den Grundträger zur anderen Außenseite des Grundträgers hindurchgehend ausgebildet, derart, dass der jeweilige Durchbruch unmittelbar in den an dieser Außenseite des Grundträgers an der Rippenstruktur gebildeten Kühlmittelkanal mündet.

Alternativ kann jeweils an jeder Außenseite des Grundträgers an geodätisch niedrigster Stelle an den Rippenstrukturen jeweils eine Kühlmittelablauföffnung zum Ablauf durch Schwerkraftwirkung an den Rippenstrukturen ausgebildet sein. Vorzugsweise sind dabei die Ablauföffnungen jeweils an einer äußeren Rippe der Rippenstrukturen ausgebildet, die gegenüber der inneren Rippe der Rippenstrukturen am weitesten von einer zentralen Durchgangsöffnung am Grundträger zur Durchführung einer den Rotor tragenden Welle angeordnet ist. Dadurch kann eine unkontrollierte Kontamination der elektrischen Schleifkontakte mit Kühlmittel vermieden werden. Hierbei ist bevorzugt ein vorangehend beschriebener gemeinsamer Kühlmittelzulauf für die an beiden axialen Außenseiten des Grundträgers an den jeweiligen Rippenstrukturen gebildeten Kühlmittelkanäle vorgesehen.

Zur Kühlmittelverbindung sind vorzugsweise mehrere zwischen den axialen Außenseiten des Grundträgers verlaufende Durchgangslöcher vorgesehen, die jeweils in die an den voneinander abgewandten axialen Außenseiten des Grundträgers jeweils an den kühlmittelführenden Rippenstrukturen gebildeten Kühlmittelkanäle unmittelbar einmünden. Demzufolge sind beide Kühlmittelkanäle zu einem Kühlkreislauf verbunden.

Im Rahmen einer Weiterbildung der Erfindung ist vorgesehen, dass die an den Außenseiten des Grundträgers jeweils an den kühlmittelführenden Rippenstrukturen gebildeten Kühlmittelkanäle zueinander deckungsgleich und in Umfangsrichtung versetzt ausgebildet sind. Dadurch kann der Aufbau und die Herstellung des Grundträgers weiter vereinfacht werden.

Es ist weiterhin von Vorteil, wenn vorzugsweise die an den Außenseiten des Grundträgers jeweils an den kühlmittelführenden Rippenstrukturen gebildeten Kühlmittelkanäle jeweils in der Draufsicht mäanderförmig mit mehreren umfänglich hintereinander angeordneten Schleifen verlaufen. Auf diese Weise ist eine besonders gleichmäßige und flächendeckende Kühlung mit besonders hoher Kühlleistung erreichbar.

Ein weiterer Vorteil ist hierbei vorzugsweise dadurch erreichbar, dass zumindest einige der Schleifen zumindest teilweise in Kontakt mit den Bereichen an den Innenseiten der Kontaktträger verlaufen, an denen an den Außenseiten der Kontaktträger die elektrischen Schleifkontakte angeordneten sind. Dadurch ist auf einfache Weise eine gezielte aktive Kühlung der im Betrieb am stärksten erwärmten Bereiche der Kontaktträger realisierbar.

Eine mögliche nächste Weiterbildung der Erfindung sieht vor, dass zur kontrollierten Minimalschmierung der elektrischen Schleifkontakte an den Rippenstrukturen jeweils gezielt ausgerichtete Spritzöffnungen vorgesehen sind. Bevorzugt ist dabei jeweils zumindest eine Spritzöffnung gezielt auf den jeweiligen elektrischen Schleifkontakt ausgerichtet. Hierbei kann die Minimalschmierung durch die Ausgestaltung der Spritzöffnungen kontrolliert eingestellt werden. Vorzugsweise sind hierbei die Spritzöffnungen jeweils am Grundträger als einseitig offener Kanal ausgebildet, der durch den jeweils anliegenden Kontaktträger kühlmitteldicht abgedeckt ist.

Bei der vorgeschlagenen Stromübertragungseinrichtung ist vorzugsweise als Werkstoff für den Grundträger Kunststoff vorgesehen, wodurch eine besonders einfache und gewichtssparende sowie kostengünstige Herstellung, insbesondere durch Spritzgießen, ermöglicht, wird.

Bevorzugt ist der Grundträger einteilig als Spritzgussbauteil ausgeführt, das zur Herstellung mit einem Spritzgusswerkzeug konstruktiv einfach aufgebaut und leicht aus diesem entformbar ist, insbesondere konstruktiv keine Hinterschnitte aufweist. Dadurch ist der Grundträger besonders einfach mit den Kontaktträgern vormontierbar und die vorgeschlagene Stromübertragungseinrichtung als vormontierte Baueinheit mit der zentralen Durchgangsöffnung an der Rotorwelle der elektrischen Maschine axial aufschiebbar und an einem ortsfesten Bauteil, insbesondere dem Statorgehäuse der elektrischen Maschine einfach befestigbar.

Anhand der Zeichnung wird die Erfindung erläutert. Es zeigen:
- Figur 1: eine erfindungsgemäße Stromübertragungseinrichtung zur elektrischen Stromübertragung auf einen Rotor einer elektrischen Maschine in einer perspektivischen Darstellung,
- Figur 2: die Stromübertragungseinrichtung an einer ersten axialen Außenseite in einer Draufsicht,
- Figur 3: die Stromübertragungseinrichtung an einer zweiten axialen Außenseite in einer Draufsicht,
- Figur 4: einen Grundträger der Stromübertragungseinrichtung in einer perspektivischen Einzelansicht,
- Figur 5: den Grundträger an einer ersten axialen Außenseite in einer Draufsicht,
- Figur 6: den Grundträger an einer zweiten axialen Außenseite in einer Draufsicht,
- Figur 7: den Grundträger an einer ersten axialen Außenseite in einer Draufsicht mit einem in gestrichelten Linien angedeuteten ersten Kontaktträger der Stromübertragungseinrichtung,
- Figur 8: den Grundträger an einer zweiten axialen Außenseite in einer Draufsicht mit einem in gestrichelten Linien angedeuteten zweiten Kontaktträger der Stromübertragungseinrichtung,

In den Figuren sind verschiedene Ansichten und Ausführungen einer erfindungsgemäßen Stromübertragungseinrichtung zur elektrischen Stromübertragung auf einen Rotor einer nicht dargestellten elektrischen Maschine beispielhaft dargestellt.

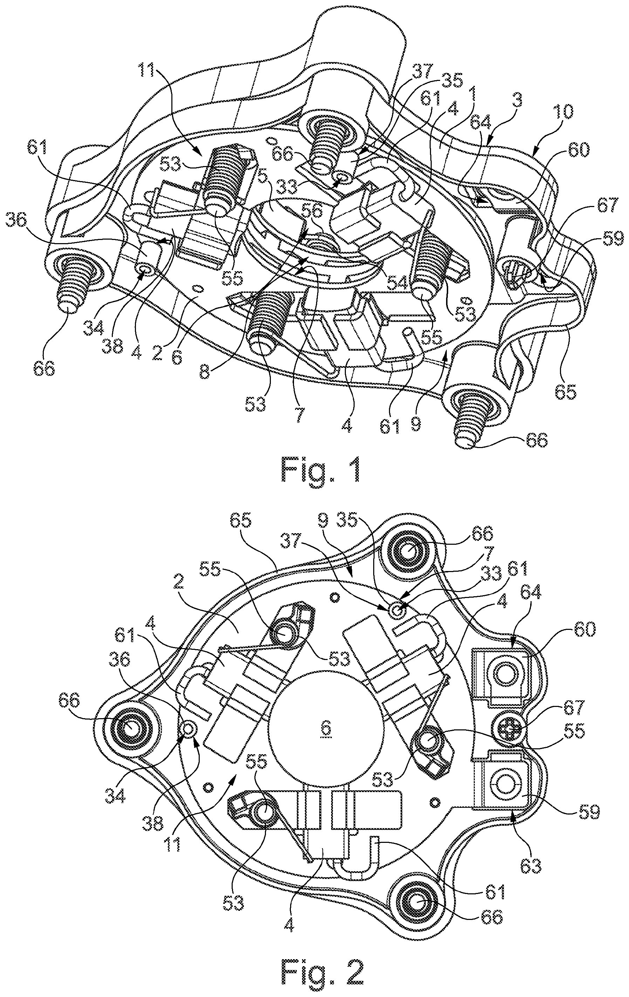

Nach Figuren 1 bis 3 umfasst die Stromübertragungseinrichtung einen einteilig ausgeführten Grundträger 1 und zwei Kontaktträger 2, 3, die jeweils drei elektrische Schleifkontakte 4, 5 zur elektrischen Stromübertragung auf den Rotor tragen. Der Grundträger 1 ist zwischen den Kontaktträgern 2, 3 diese tragend und elektrisch isolierend koaxial mit den Kontaktträgern 2, 3 angeordnet. Der Grundträger 1 und die Kontaktträger 2, 3 bilden an der ortsfest anzuordnen Stromübertragungseinrichtung eine zentrale Durchgangsöffnung 6 zur Durchführung einer den Rotor tragenden Welle der elektrischen Maschine.

Der Grundträger 1 und die Kontaktträger 2, 3 sind plattenförmig ausgeführt. Die Kontaktträger 2, 3 sind vorzugsweise als kreisrunde Kontaktplatten ausgebildet. Sie sind mit ihren dem Grundträger 1 axial zugewandten planen Innenseiten 7, 8 an den voneinander abgewandten axial Außenseiten 9, 10 des Grundträgers 1 beispielsweise über axiale Schraubenverbindungen befestigt. An den voneinander abgewandten axialen Außenseiten 11, 12 der Kontaktträger 2, 3 sind die elektrischen Schleifkontakte 4, 5 umfänglich gleichmäßig verteilt angeordnet und befestigt.

Zur Abfuhr der an den elektrischen Schleifkontakten 4, 5 im Betrieb erzeugten Wärme ist zur Kühlung der Kontaktträger 2, 3 jeweils ein an den Oberflächen des Grundträgers 1 an den axialen Außenseiten 9, 10 desselben und an den Oberflächen der Kontaktträger 2, 3 begrenzter geschlossen umlaufender Kühlmittelkanal 19, 20 gebildet.

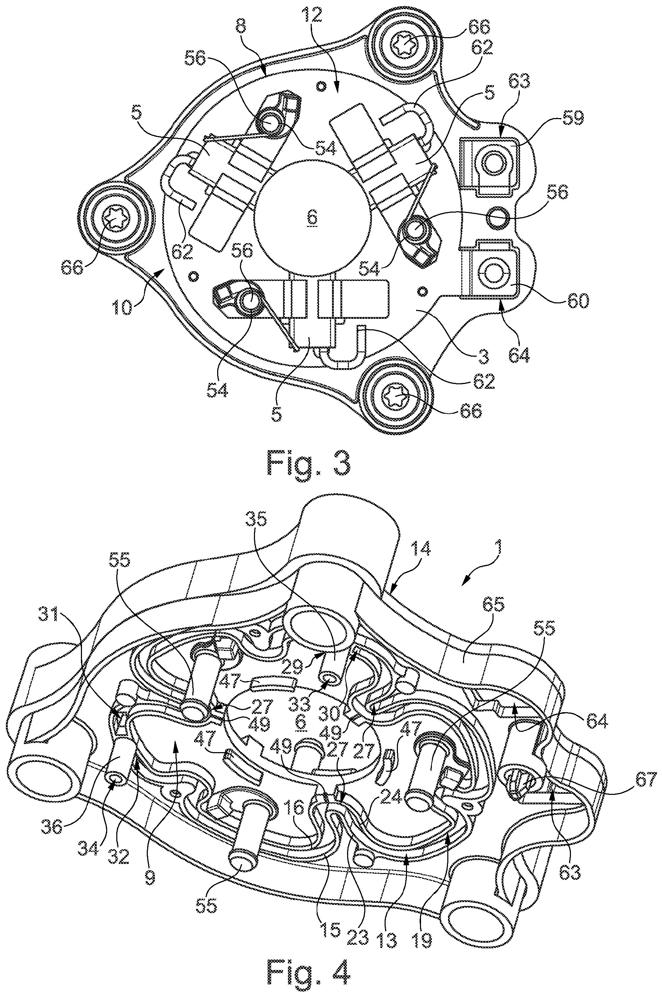

Zur Ausbildung der Kühlmittelkanäle 19, 20 sind an den axialen Außenseiten 9, 10 des Grundträgers 1 jeweils an der Oberfläche hervorstehende axial einseitig offene Rippenstrukturen 13, 14 vorgesehen (Figuren 4 bis 6). Diese werden jeweils durch zwei einteilig mit dem Grundträger 1 ausgeführte an den planen axialen Außenseiten 9, 10 desselben senkrecht axial hervorstehende Rippen 15, 16 bzw. 17, 18 gebildet.

Die Rippen 15, 16 bzw. 17, 18 bilden jeweils eine geschlossen umlaufende Begrenzungswand und sind jeweils gegenüberliegend durchgehend mit gleichem Abstand zueinander angeordnet, so dass sie jeweils zwischen ihnen einen geschlossen umlaufenden Kühlmittelkanal 19, 20 begrenzen, der nach axial außen offen ist. Dabei sind die axial offenen Seiten 21, 22 der Kühlkanäle 19, 20 jeweils durch den jeweils axial anliegenden Kontaktträger 2, 3 kühlmitteldicht abgedeckt (Figuren 1 bis 3).

Auf diese Weise bilden an einer ersten axialen Außenseite 9 des Grundträgers 1 die Rippen 15, 16 mit einem axial anliegenden ersten Kontaktträger 2 einen geschlossen umlaufenden ersten Kühlmittelkanal 19 und an der zweiten axialen Außenseite 10 des Grundträgers 1 die Rippen 17, 18 mit einem axial anliegenden zweiten Kontaktträger 3 einen geschlossen umlaufenden zweiten Kühlmittelkanal 20. Bevorzugt sind dabei die Kühlmittelkanäle 19, 20 umlaufend kühlmitteldicht zur Umgebung abgedichtet.

Zur Abdichtung bilden die Rippen 15, 16 bzw. 17, 18 an den Stirnseiten ihrer frei axial vorstehenden Enden jeweils eine plane Dichtfläche 23, 24 bzw. 25, 26 (Figuren 4 bis 8), an die der jeweilige Kontaktträger 2, 3 mit der jeweiligen planen axialen Innenseite kühlmitteldicht axial angelegt ist. Gegebenenfalls können zur zusätzlichen Abdichtung auch entsprechende Dichtungen vorgesehen sein.

Dadurch sind an den Rippen 15, 16 bzw. 17, 18 zugleich die Kontaktträger 2, 3 axial abgestützt. Zur weiteren Abstützung können an beiden axialen Außenseiten 9, 10 des Grundträgers 1 mit dem Grundträger 1 einteilig ausgeführte kreisbogenförmig verlaufende Abstützrippen 47 bzw. 48, wie dargestellt, vorgesehen sein. Die Abstützrippen 47 bzw. 48, an jeder Außenseite 9, 10 vorzugsweise jeweils drei sind im Bereich der kreisrunden zentralen Durchgangsöffnung 6 koaxial zu dieser in Umfangsrichtung gleichmäßig verteilt angeordnet. Auf diese Weise kann am Grundträger 1 die Kontaktfläche zur Abstützung der Kontaktträger 2, 3 klein und damit die Erwärmung desselben gering gehalten werden.

An den axialen Außenseiten 9, 10 des Grundträgers 1 verlaufen die Rippen 15, 16 bzw. 17, 18 und die zwischen ihnen gebildeten Kühlmittelkanäle 19, 20 jeweils in der axialen Draufsicht in Umfangsrichtung mäanderförmig mit mehreren hintereinander angeordneten Schleifen (Figuren 4 bis 8). Dabei verlaufen jeweils die inneren Rippen 16 bzw. 18 näher an der zentralen Durchgangsöffnung 6 und die äußeren Rippen 15 bzw. 17 weiter entfernter von dieser. Durch diese Kanalführung ist eine gleichmäßige aktive Kühlung der Kontaktträger 2, 3 und der auf diesen angeordneten elektrischen Schleifkontakte 4, 5 mit hoher Kühlleistung erreichbar.

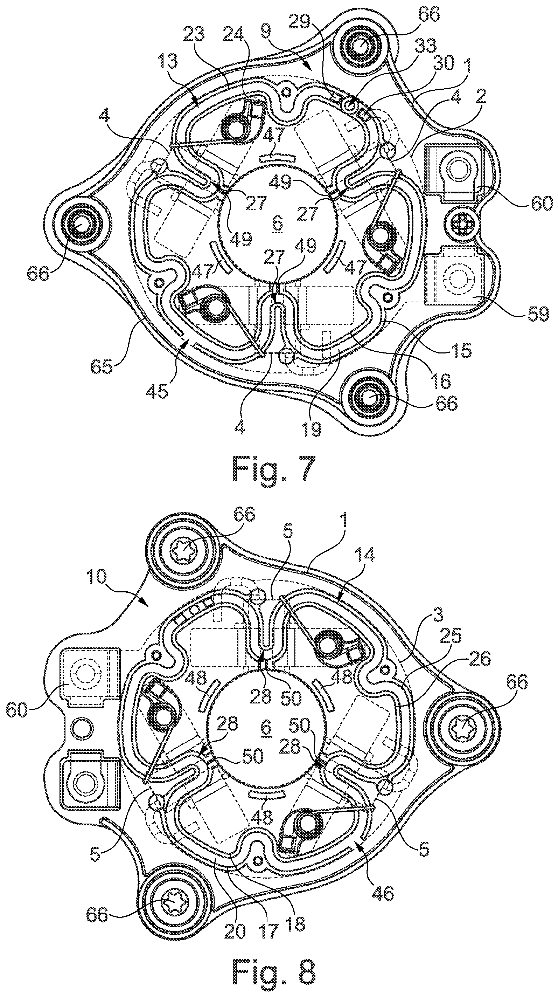

Dabei sind die Kühlmittelkanäle 19, 20 derart geführt, dass vorzugsweise jeweils drei besonders weit nach innen zur zentralen Durchgangsöffnung 6 hin verlaufende inneren Schleifen 27 bzw. 28 gebildet sind, so dass diese jeweils in Kontakt mit den Bereichen an den Innenseiten 7, 8 der Kontaktträger 2, 3 verlaufen, an denen an den Außenseiten 7, 8 der Kontaktträger 2, 3 die elektrischen Schleifkontakte 4 bzw. 5 angeordnet sind (Figuren 7 und 8). Demzufolge ermöglicht die Kanalführung der Kühlmittelkanäle 19, 20 auf einfache Weise eine gezielte Kühlung der Bereiche der Kontaktträger 2, 3, an denen die größte Wärme entsteht.

Nach Figuren 4 bis 6 sind zur Kühlmittelverbindung vorzugsweise mehrere zwischen den axialen Außenseiten 9, 10 des Grundträgers 1 verlaufende Durchgangslöcher 29, 30 bzw. 31, 32 vorgesehen, die jeweils an den voneinander abgewandten axialen Außenseiten des Grundträgers 1 in die jeweils an den Rippenstrukturen 13, 14 gebildeten Kühlmittelkanäle 19, 20 unmittelbar einmünden.

Demnach bilden die Kühlmittelkanäle 19, 20 einen gemeinsamen Kühlkreislauf, der an der ersten axialen Außenseite 9 des Grundträgers über einen gemeinsamen Kühlmittelzulauf 33 und einen gemeinsamen Kühlmittelablauf 34 an eine Kühlmittelversorgung des Fahrzeugs anschließbar ist. Als Kühlmittel kann beispielsweise Öl aus dem Getriebeölkreislauf der elektrischen Maschine verwendet werden.

Der Kühlmittelzulauf 33 und der Kühlmittelablauf 34 sind jeweils als axial nach außen an den Außenseiten 9, 10 vorstehender röhrenförmiger Ansatz 35, 36, beispielsweise als Anschlussstutzen, vorzugsweise einteilig mit dem Grundträger 1 ausgeführt (Figuren 1, 2 und 4). Mit den Ansätzen 35, 36 sind der Kühlmittelzulauf 33 und der Kühlmittelablauf 34 jeweils durch die Kontaktplatten 2, 3 an Durchgangsöffnungen 37, 38 zu den Außenseiten 7, 8 derselben axial vorstehend hindurchgeführt (Figuren 1).

Im Bereich des Kühlmittelzulaufs 33 und des Kühlmittelablaufs 34 sind jeweils die Rippen 15, 16 durch einen mit diesen an den freien axialen Stirnseiten bündig abschließenden Anschlusssteg 39, 40 miteinander verbunden, der den Kühlmittelkanal 19 unterbricht (Figuren 4 und 5). Die Anschlussstege 39, 40 sind einteilig mit den Rippen 15, 16 und dem Grundträger 1 ausgeführt.

In axial innere Richtung erstrecken sich dabei der Kühlmittelzulauf 33 und der Kühlmittelablauf 34 jeweils ausgehend vom jeweiligen Anschlusssteg 39, 40 axial fluchtend zu dem jeweiligen Ansatz 35, 36 als axialer Durchbruch 41, 42 am Grundträger 1 zur zweiten axialen Außenseite 10 desselben und münden in den dort gebildeten Kühlmittelkanal 20 unmittelbar ein (Figur 6).

Die Anschlussstege 39, 40 bilden an ihren axialen Stirnseiten plane Dichtflächen 43, 44, die jeweils in die Dichtflächen 23, 24 an den Stirnseiten der Rippen 15, 16 plan übergehen. An den Dichtflächen 43, 44 liegt der Kontaktträger 2 am Grundträger 1 kühlmitteldicht axial an und dichtet den Bereich der Durchgangsöffnungen 37, 38 an den Kontaktträgern 2, 3 ab.

Die Durchgangslöcher 29, 30 bzw. 31, 32 zur Kühlmittelverbindung der Kühlmittelkanäle 19, 20 weisen ein rechteckiges Querschnittsprofil auf und sind im Kühlmittelkanal 19 beidseitig der Anschlussstege 39, 40 unmittelbar angrenzend an diese positioniert (Figuren 4 und 5).

Das am Kühlmittelzulauf 33 an der ersten axialen Außenseite 9 des Grundträgers 1 eintretende Kühlmittel gelangt über den Durchbruch 41 zunächst in den zweiten Kühlmittelkanal 20 an der zweiten axialen Außenseite 10 des Grundträgers 1 und kann sich in beiden Kanal- bzw. Umlaufrichtungen in diesem verteilen. Über die Kühlmittelverbindung an den Durchgangslöchern 29, 30 bzw. 31, 32 kann es in den ersten Kühlmittelkanal 19 an der ersten axialen Außenseite 9 und wieder zurück zum zweiten Kühlmittelkanal 20 strömen und am Kühlmittelablauf 34 über den Durchbruch 42 und den Ansatz 36 an der ersten axialen Außenseite 10 des Grundträgers 1 ablaufen.

Alternativ kann wie in Figuren 7 und 8 dargestellt an jeder axialen Außenseite 9, 10 des Grundträgers 1 an den Rippenstrukturen 13, 14 jeweils eine Kühlmittelablauföffnung 45, 46 ausgebildet sein, die jeweils zum Ablauf durch Schwerkraftwirkung vorzugsweise an geodätisch niedrigster Stelle angeordnet ist. Dabei sind entsprechende Ablauföffnungen 45, 46 bevorzugt jeweils an der äußeren Rippe 15 bzw. 17 der jeweiligen Rippenstrukturen 13, 14 ausgebildet, um eine unkontrollierte Kontamination der elektrischen Schleifkontakte 4, 5 mit Kühlmittel im Bereich der zentralen Durchgangsöffnung 6 zu vermeiden.

Um über die kühlmittelführenden Rippenstrukturen 13 bzw. 14 gebildeten Kühlkanäle 19, 20 bei Bedarf eine Minimalschmierung der elektrischen Schleifkontakte 4 bzw. 5 an den Kontaktträgern 2, 3 realisieren zu können, ist es in einer weiteren alternativen Ausgestaltung möglich, wie in Figuren 4 bis 6 gezeigt, an beiden axiale Außenseiten 9, 10 des Grundträgers 1 jeweils an den kühlmittelführenden Rippenstrukturen 13 bzw. 14 ausgebildete Spritzöffnungen 49 bzw. 50 vorzusehen. Die Spritzöffnungen 49 bzw. 50 sind jeweils einem elektrischen Schleifkontakt 4 bzw. 5 zugeordnet. An den Spritzöffnungen 49 bzw. 50 kann gezielt und kontrolliert Spritzöl aus dem Kühlmittelkreislauf auf die elektrischen Schleifkontakte 4 bzw. 5 verteilt werden.

Die Spritzöffnungen 49 bzw. 50 sind jeweils ausgehend von den inneren Rippen 16 bzw. 18 an den der zentralen Durchgangsöffnung 6 zugewandten inneren Schleifen 27 bzw. 28 im Bereich des Scheitelpunkts derselben angeordnet. Um eine gezielte Ausrichtung der Spritzöffnungen 49 bzw. 50 und Führung des Spritzöls zu erreichen, sind diese jeweils als von den äußeren Rippen 15 bzw. 17 jeweils ausgehender Kanal ausgebildet, der auf die zentrale Durchgangsöffnung 6 gerade zulaufend bis zu dieser verläuft und am Ende gezielt auf den jeweiligen elektrischen Schleifkontakt 4 bzw. 5 ausgerichtet ist.

Hierzu sind an den äußeren Rippen 15 bzw. 17 an den Außenseiten derselben in Richtung der zentralen Durchgangsöffnung 6 einteilig mit diesem und dem Grundträger 1 verlaufende Ansätze 51 bzw. 52 vorgesehen, die an ihren axialen Außenseiten jeweils an einer Vertiefung einen nach axial außen offenen Spritzkanal bilden, der an der offenen Seite durch die jeweils anliegenden Kontaktträger 2, 3 kühlmitteldicht abgedeckt ist. Dabei erstrecken sich Ansätze 51 bzw. 52 bis zum Rand der zentralen Durchgangsöffnung 6 und schließen an den axialen Stirnseiten einerseits mit den freien stirnseitigen Enden der Rippen 15 bzw. 17 und andererseits mit der zentralen Durchgangsöffnung 6 bündig ab.

Zur Halterung von Andruckmitteln 53 bzw. 54, insbesondere Federmitteln vorzugsweise Drehschenkelfedern, zum Andrücken der Schleifkontakte 4 bzw. 5 sind an beiden axialen Außenseiten des Grundträgers 1 vorzugweise einteilig mit diesem ausgeführte Halterungsstifte oder -bolzen 55 bzw. 56 vorgesehen (Figuren 1 bis 3). Diese sind an den axialen Außenseiten des Grundträgers 1 axial vorstehend an den Kontaktträgern an diesen axial vorstehend hindurchgeführt. An den Halterungsstiften 55 bzw. 56 ist jeweils eine Drehschenkelfeder 53 bzw. 54 axial aufgesteckt und spannt mit einem freien Federschenkel den jeweiligen elektrischen Schleifkontakt 4 bzw. 5 nach innen in Richtung der zentralen Durchgangsöffnung 6 vor (Figur 1).

Der Grundträger 1 ist in einem elektrisch isolierenden Material vorzugsweise in Kunststoff ausgeführt. Er ist dabei insbesondere mit den kühlmittelführenden Rippenstrukturen 13, 14 konstruktiv besonders einfach, insbesondere ohne einen Hinterschnitt, als Spritzgussbauteil ausgeführt und so mit einem Spritzgusswerkzeug einfach herstellbar und aus diesem leicht entformbar. Demnach kann der Grundträger 1 besonders einfach und kostengünstig einteilig durch Spritzgießen hergestellt werden.

Die Kontaktträger 2, 3 sind in einem elektrisch leitenden Material, insbesondere Metall vorzugsweise Buntmetall beispielsweise Messing ausgeführt. Sie können in Blech besonders einfach und kostengünstig, insbesondere durch Stanzen und Biegen einteilig als Stanz-Biege-Bauteil, hergestellt werden. Die Kontaktträger 2, 3 sind nach Figuren 1 bis 3 über jeweils eine einteilig mit diesen ausgeführte elektrische Anschlusslasche 59 bzw. 60 mit elektrischen Kontakten an eine nicht dargestellte elektrische Versorgung, insbesondere an das elektrische Bordnetz eines Fahrzeugs, angeschlossen. Demzufolge sind die Kontaktträger 2, 3 stromführend, so dass die elektrischen Schleifkontakt 4 bzw. 5 jeweils über mit der jeweiligen Kontaktplatte 2, 3 verbundenen Anschlusslitzen 61 bzw. 62 auf einfache Weise elektrisch angeschlossen, vorzugsweise stoffschlüssig beispielsweise durch Löten oder Schweißen, werden können. Die elektrischen Schleifkontakt 4 bzw. 5 sind bevorzugt als elektrisch leitende sogenannten Bürsten ausgeführt, die den elektrischen Kontakt zu einem nicht dargestellten auf der Rotorwelle angeordneten Schleifring zur elektrischen Stromversorgung des Rotors herstellen.

Am Grundträger 1 sind gemäß Figuren 1 bis 3 und 5 bis 8 korrespondierend zu den elektrischen Anschlusslaschen 59 bzw. 60 der Kontaktträger 2, 3 nebeneinander angeordnet axiale Durchbrüche 63, 64 vorgesehen, an denen die elektrischen Kontakte der Anschlusslaschen 59 bzw. 60 beider Kontaktträger 2, 3 von einer axialen Außenseite 9, 10 vorzugsweise von der zweiten Außenseite 10 des elektrischen Grundträgers 1 aus besonders einfach elektrisch, beispielsweise durch Aufstecken von Kabelschuhen, anschließbar sind.

Am Grundträger 1 ist gemäß Figuren 1, 2, 4, 5 und 7 einteilig mit diesem eine am Außenrand umlaufende an der ersten axialen Außenseite 9 frei vorstehende Gehäusewand 65 ausgebildet. Er weist mehrere, vorzugsweise drei, am Außenrand in die Gehäusewand 65 integrierte axiale Schraubenverbindungen 66 auf (Figuren 1 bis 3), die gleichmäßig am Umfang verteilt angeordnet sind und an der ersten axialen Außenseite 9 hervorstehen. Mit den Schraubenverbindungen 66 und mit der Montagehilfe 67 kann die Stromübertragungseinrichtung zentriert an der elektrischen Maschine, bevorzugt am Statorgehäuse, ortsfest angebracht werden.

Hierbei kann der Grundträger 1 mit den vormontierte Kontaktträgern 2, 3 an der zentralen Durchgangsöffnung 6 an der Rotorwelle der elektrischen Maschine aufgeschoben und mit der ersten axialen Außenseite 9, somit der Rückseite des Grundträgers 1 bzw. der Stromübertragungseinrichtung, am Statorgehäuse angeschraubt werden. Dabei können an der ersten axialen Außenseite 9 auch der Kühlmittelzulauf 33 und der Kühlmittelablauf 34 beispielsweise an den Getriebeölkreislauf der elektrischen Maschine angeschlossen werden. An der freien zweiten axialen Außenseite 10, somit der Vorderseite des Grundträgers 1 bzw. der Stromübertragungseinrichtung, können beide Kontaktplatten 2, 3 an den Anschlusslaschen 55, 56 elektrisch angeschlossen werden.

### Bezugszeichenliste

- 1: Grundträger
- 2: erster Kontaktträger
- 3: zweiter Kontaktträger
- 4: Schleifkontakt
- 5: Schleifkontakt
- 6: Durchgangsöffnung
- 7: Innenseite des ersten Kontaktträgers
- 8: Innenseite des zweiten Kontaktträgers
- 9: erste Außenseite des Grundträgers
- 10: zweite Außenseite des Grundträgers
- 11: Außenseite des ersten Kontaktträgers
- 12: Außenseite des zweiten Kontaktträgers
- 13: Rippenstruktur
- 14: Rippenstruktur,
- 15: äußere Rippe
- 16: innere Rippe
- 17: äußere Rippe
- 18: innere Rippe
- 19: erster Kühlmittelkanal
- 20: zweiter Kühlmittelkanal
- 21: offene Seite
- 22: offene Seite
- 23: Dichtfläche
- 24: Dichtfläche
- 25: Dichtfläche
- 26: Dichtfläche
- 27: innere Schleife
- 28: innere Schleife
- 29: Durchgangsloch
- 30: Durchgangsloch
- 31: Durchgangsloch
- 32: Durchgangsloch
- 33: Kühlmittelzulauf
- 34: Kühlmittelablauf
- 35: Ansatz, Anschlussstutzen
- 36: Ansatz, Anschlussstutzen
- 37: Durchgangsöffnung
- 38: Durchgangsöffnung
- 39: Anschlusssteg
- 40: Anschlusssteg
- 41: Durchbruch
- 42: Durchbruch
- 43: Dichtfläche
- 44: Dichtfläche
- 45: Öffnung
- 46: Öffnung
- 47: Abstützrippe
- 48: Abstützrippe
- 49: Spritzöffnung
- 50: Spritzöffnung
- 51: Ansatz
- 52: Ansatz
- 53: Andruckmittel, Federmittel, Drehschenkelfedern
- 54: Andruckmittel, Federmittel, Drehschenkelfedern
- 55: Halterungsstift- oder bolzen
- 56: Halterungsstift- oder bolzen
- 57: nicht vergeben
- 58: nicht vergeben
- 59: Anschlusslasche
- 60: Anschlusslasche
- 61: Anschlusslitze
- 62: Anschlusslitze
- 63: Durchbruch
- 64: Durchbruch
- 65: Gehäusewand
- 66: Schraubenverbindung
- 67: Montageelement

## Patentansprüche

1. Stromübertragungseinrichtung zur elektrischen Stromübertragung auf einen Rotor einer elektrischen Maschine, mit zwei Kontaktträgern (2, 3), die jeweils elektrische Schleifkontakte (4, 5) zur Stromübertragung auf den Rotor tragen, wobei zwischen den Kontaktträgern (2, 3) ein diese tragender und elektrisch isolierender Grundträger (1) angeordnet ist, wobei die Stromübertragungsvorrichtung wenigstens einen Kühlmittelkanal (19, 20) hat, **dadurch gekennzeichnet, dass** an den zumindest abschnittsweise aneinander anliegenden Elementen Grundträger (1) und Kontaktträger (2, 3), zwischen jeder Außenseite (9, 10) des Grundträgers (1) und dem anliegenden Kontaktträger (2, 3), zumindest ein geschlossen umlaufender Kühlmittelkanal (19, 20) zur Kühlung der beiden Kontaktträger (2, 3) gebildet ist, derart, dass am Grundträger (1), an seiner dem jeweiligen Kontaktträger (2, 3) zugewandten Außenseite (9, 10), eine an der Oberfläche hervorstehende einseitig offenen Rippenstruktur (13, 14) vorgesehen ist, welche mit dem an ihr anliegenden und diese an ihrer axial offenen Seite (21, 22) kühlmitteldicht abdeckenden jeweiligen Kontaktträger (2, 3) den geschlossen umlaufenden Kühlmittelkanal (19, 20) bildet.

2. Stromübertragungseinrichtung nach Anspruch 1, **dadurch gekennzeichnet, dass** die Rippenstrukturen (13, 14) durch zumindest zwei an der Oberfläche hervorstehende Rippen (15, 16 17, 18) gebildet sind, wobei die Rippen (15, 16 17, 18) jeweils gegenüberliegend angeordnet sind und geschlossen umlaufen, derart, dass sie zwischen ihnen einen geschlossen umlaufenden einseitig offenen Kühlmittelkanal (19, 20) begrenzen, der an der offenen Seite (21, 22) durch einen anliegenden Kontaktträger (2, 3) kühlmitteldicht abgedeckt ist.

3. Stromübertragungseinrichtung nach Anspruch 2, **dadurch gekennzeichnet, dass** die Rippen (15, 16, 17, 18) jeweils an den Stirnseiten ihrer axial vorstehenden freien Enden jeweils eine Dichtfläche (23, 24, 25, 26) bilden, wobei an den Dichtflächen (23, 24, und 25, 26) zweier gegenüberliegend angeordneten Rippen (15, 16 und 17, 18) ein Kontaktträger (2, 3) kühlmitteldicht angelegt ist.

4. Stromübertragungseinrichtung nach Anspruch 3, **dadurch gekennzeichnet, dass** die Kontaktträger (2, 3) als Platten ausgeführt sind und jeweils mit einer flachen axialen Innenseite (7, 8) an planen Dichtflächen (23, 24, 25, 26) der an den voneinander abgewandten Außenseiten (9, 10) des Grundträgers (1) gebildeten Rippenstrukturen (13, 14) kühlmitteldicht axial anliegen und jeweils einen zwischen diesen gebildeten Kühlmittelkanal (19, 20) kühlmitteldicht nach außen abdecken.

5. Stromübertragungseinrichtung nach einem der Ansprüche 1 bis 4, **dadurch gekennzeichnet, dass** die jeweils an den Außenseiten (9, 10) des Grundträgers (1) an den Rippenstrukturen (13, 14) gebildeten Kühlkanäle (19, 20) miteinander in Kühlmittelverbindung (29, 30, 31, 32) stehen und an den Rippenstrukturen (13) einer Außenseite (9) des Grundträgers (1) ein gemeinsamer Kühlmittelzulauf (33) und ein gemeinsamer Kühlmittelablauf (34) für die an beiden axialen Außenseiten (9, 10) jeweils angeordneten Kühlmittelkanäle (19, 20) gebildet ist.

6. Stromübertragungseinrichtung nach einem der Ansprüche 1 bis 5, **dadurch gekennzeichnet, dass** die an den Rippenstrukturen (13, 14) gebildeten Kühlmittelkanäle (19, 20) jeweils in der axialen Draufsicht mäanderförmig mit mehreren umfänglich hintereinander angeordneten Schleifen (27, 28) verlaufen, derart, dass letztere zumindest teilweise in Kontakt mit den Bereichen an den Innenseiten (7, 8) der Kontaktträger (2, 3) gelangen, an denen an den Außenseiten (11, 12) der Kontaktträger (2, 3) die elektrischen Schleifkontakte (4, 5) angeordneten sind.

7. Stromübertragungseinrichtung nach einem der Ansprüche 1 bis 6, **dadurch gekennzeichnet, dass** an den Rippenstrukturen (13, 14) jeweils gezielt ausgerichtete Spritzöffnungen (49, 50) zur kontrollierten Minimalschmierung der der elektrischen Schleifkontakt (4, 5) vorgesehen sind.

8. Stromübertragungseinrichtung nach einem der Ansprüche 1 bis 7, **dadurch gekennzeichnet, dass** als Werkstoff für den Grundträger (1) Kunststoff vorgesehen und der Grundträger (1) einteilig als Spritzgussbauteil ausgeführt ist.

## Claims

1. A current transmission device for transmitting electrical current to a rotor of an electric machine, comprising two contact carriers (2, 3), each carrying electrical sliding contacts (4, 5) for transmitting current to the rotor, wherein a base carrier (1), which supports and electrically insulates the contact carriers (2, 3), is arranged between said contact carriers, wherein the current transmission device has at least one coolant channel (19, 20), **characterised in that** on the base carrier (1) and contact carrier (2, 3) elements, which abut each other at least in sections, at least one continuous circumferential coolant channel (19, 20) for cooling the two contact carriers (2, 3) is formed between each outer side (9, 10) of the base carrier (1) and the abutting contact carrier (2, 3), such that a rib structure (13, 14) projecting from the surface and open on one side is provided on the base carrier (1) on its outer side (9, 10) facing the respective contact carrier (2, 3), which forms the continuous circumferential coolant channel (19, 20) together with the respective contact carrier (2, 3) abutting and covering the rib structure in a coolant-tight manner on its axially open side (21, 22).

2. The current transmission device according to Claim 1, **characterised in that** the rib structures (13, 14) are formed by at least two ribs (15, 16, 17, 18) projecting from the surface, wherein the ribs (15, 16, 17, 18) are arranged opposite one another in each case and run continuously around the circumference, such that between them they delimit a continuous circumferential coolant channel (19, 20) which is open on one side, and is covered in a coolant-tight manner on the open side (21, 22) by an abutting contact carrier (2, 3).

3. The current transmission device according to Claim 2, **characterised in that** the ribs (15, 16, 17, 18) each form a sealing surface (23, 24, 25, 26) at the end faces of their axially projecting free ends, wherein a contact carrier (2, 3) is placed in a coolant-tight manner on the sealing surfaces (23, 24 and 25, 26) of two ribs (15, 16 and 17, 18) arranged opposite one another.

4. The current transmission device according to Claim 3, **characterised in that** the contact carriers (2, 3) are designed as plates and, with a flat axial inner side (7, 8), each axially abut planar sealing surfaces (23, 24, 25, 26) of the rib structures (13, 14) formed on the outer sides (9, 10) of the base carrier (1), which face away from each other, in a coolant-tight manner and each outwardly cover a coolant channel (19, 20) formed there between in a coolant-tight manner.

5. The current transmission device according to any one of Claims 1 to 4, **characterised in that** the cooling channels (19, 20) formed on the rib structures (13, 14) on each of the outer sides (9, 10) of the base carrier (1) are in coolant communication (29, 30, 31, 32) with one another and, on the rib structures (13) of one outer side (9) of the base carrier (1), a common coolant inlet (33) and a common coolant outlet (34) are formed for the coolant channels (19, 20) respectively arranged on both axial outer sides (9, 10).

6. The current transmission device according to any one of Claims 1 to 5, **characterised in that** in an axial plan view, the coolant channels (19, 20) formed on the rib structures (13, 14) each run in a meandering pattern with a plurality of successively circumferentially arranged loops (27, 28) such that the loops at least partially come into contact with the regions on the inner sides (7, 8) of the contact carriers (2, 3) on which the electrical sliding contacts (4, 5) are arranged on the outer sides (11, 12) of the contact carriers (2, 3).

7. The current transmission device according to any one of Claims 1 to 6, **characterised in that** specifically oriented spray openings (49, 50) are provided on each of the rib structures (13, 14) for controlled minimum quantity lubrication of the electrical sliding contacts (4, 5).

8. The current transmission device according to any one of Claims 1 to 7, **characterised in that** plastic is provided as the material for the base carrier (1) and the base carrier (1) is designed as a one-piece injection-moulded component.

## Revendications

1. Dispositif de transmission de courant destiné à transmettre un courant électrique à un rotor d'une machine électrique, comprenant deux supports de contacts (2, 3) portant respectivement des contacts électriques glissants (4, 5) pour transmettre le courant au rotor, dans lequel un support de base (1) supportant et isolant électriquement les supports de contacts (2, 3) est disposé entre eux, dans lequel le dispositif de transmission de courant comporte au moins un canal de refroidissement (19, 20), **caractérisé en ce qu'**au moins un canal de refroidissement (19, 20) périphérique fermé destiné à refroidir les deux supports de contacts (2, 3) est formé sur les éléments, support de base (1) et support de contacts (2, 3), qui se touchent au moins partiellement, entre chaque face extérieure (9, 10) du support de base (1) et le support de contacts adjacent (2, 3), de telle sorte que sur le support de base (1), sur sa face extérieure (9, 10) tournée vers le support de contacts (2, 3) respectif, est disposée une structure nervurée (13, 14) faisant saillie à la surface et ouverte d'un seul côté, qui forme, avec le support de contacts (2, 3) respectif qui s'y appuie et qui recouvre celui-ci de manière étanche au liquide de refroidissement sur sa face axialement ouverte (21, 22), le canal de refroidissement (19, 20) périphérique fermé.

2. Dispositif de transmission de courant selon la revendication 1, **caractérisé en ce que** les structures nervurées (13, 14) sont constituées d'au moins deux nervures (15, 16, 17, 18) faisant saillie de la surface, les nervures (15, 16 17, 18) étant agencées respectivement l'une en face de l'autre et formant une boucle fermée, de telle sorte qu'elles délimitent entre elles un canal de fluide de refroidissement (19, 20) formant une boucle fermée et ouvert d'un seul côté, lequel est recouvert de manière étanche au fluide de refroidissement, du côté ouvert (21, 22), par un support de contacts (2, 3) adjacent.

3. Dispositif de transmission de courant selon la revendication 2, **caractérisé en ce que** les nervures (15, 16, 17, 18) forment respectivement, sur les faces avant de leurs extrémités libres faisant saillie axialement, une surface d'étanchéité (23, 24, 25, 26), dans lequel, un support de contacts (2, 3) étant appliqué de manière étanche au fluide de refroidissement sur les surfaces d'étanchéité (23, 24 et 25, 26) de deux nervures (15, 16 et 17, 18) agencées l'une en face de l'autre.

4. Dispositif de transmission de courant selon la revendication 3, **caractérisé en ce que** les supports de contacts (2, 3) sont conçus sous forme de plaques et viennent chacun en appui, avec une face intérieure (7, 8) axiale plane, contre des surfaces d'étanchéité (23, 24, 25, 26) planes des structures nervurées (13, 14) formées sur les faces extérieures (9, 10) du support de base (1) qui sont tournées à l'opposé l'une de l'autre, et recouvrent chacune de manière étanche au fluide de refroidissement vers l'extérieur un canal de refroidissement (19, 20) formé entre celles-ci.

5. Dispositif de transmission de courant selon l'une des revendications 1 à 4, **caractérisé en ce que** les canaux de refroidissement (19, 20), formés respectivement sur les faces extérieures (9, 10) du support de base (1) au niveau des structures nervurées (13, 14), sont reliés entre eux par des conduits de refroidissement (29, 30, 31, 32) et **en ce qu'**une arrivée commune de fluide de refroidissement (33) et une sortie commune de fluide de refroidissement (34) pour les canaux de refroidissement (19, 20) agencés respectivement sur les deux faces extérieures axiales (9, 10) sont formées sur les structures nervurées (13) d'une face extérieure (9) du support de base (1).

6. Dispositif de transmission de courant selon l'une des revendications 1 à 5, **caractérisé en ce que** les canaux de fluide de refroidissement (19, 20) formés sur les structures nervurées (13, 14) s'étendent chacun, en vue en plan axiale, de manière méandriforme avec plusieurs boucles (27, 28) agencées successivement sur la circonférence, de telle sorte que ces dernières entrent au moins partiellement en contact avec les zones des faces intérieures (7, 8) des supports de contacts (2, 3) sur lesquelles, sur les faces extérieures (11, 12) des supports de contacts (2, 3), sont agencés les contacts électriques glissants (4, 5).

7. Dispositif de transmission de courant selon l'une des revendications 1 à 6, **caractérisé en ce que** les structures nervurées (13, 14) comportent respectivement des orifices d'injection (49, 50) orientés de manière ciblée pour assurer une lubrification minimale contrôlée des contacts électriques glissants (4, 5).

8. Dispositif de transmission de courant selon l'une des revendications 1 à 7, **caractérisé en ce que** le plastique sert de matériau pour le support de base (1) et **en ce que** le support de base (1) est fabriqué d'un seul tenant sous la forme d'une pièce moulée par injection.
